# EUROPEAN PATENT APPLICATION

(11) **EP 4 534 597 A1**
(43) Date of publication of application: **09.04.2025**
(21) Application number: 23811842.6
(22) Date of filing: 24.05.2023
(51) Int. Cl.: C08L 29/04, B32B 27/28, C08K 5/01, C08L 23/00

(54) **RESIN COMPOSITION, MULTILAYERED STRUCTURE, MOLDED ARTICLE, AND METHOD FOR PRODUCING RESIN COMPOSITION**

(30) Priority: 27.05.2022 JP 2022086678
(71) Applicant: Mitsubishi Chemical Corporation, Tokyo 100-8251 (JP)
(72) Inventor: TERAOKA Kota, Tokyo 100-8251 (JP)
(74) Representative: Hoffmann Eitle
(86) International application number: PCT/JP2023/019304
(87) International publication number: WO 2023/228970

(57) **Abstract**

A resin composition having excellent thermal stability is provided. The resin composition contains an ethylene-vinyl alcohol copolymer (A) and lycopene (B).

## Description

### TECHNICAL FIELD

The present disclosure relates to a resin composition and more particularly to a resin composition with improved thermal stability.

### BACKGROUND ART

Ethylene-vinyl alcohol copolymers (which hereinafter may be referred to as "EVOH") have an extremely strong intermolecular force because of hydrogen bonds between hydroxyl groups present in the polymer side chains. EVOH therefore has a high crystallinity and a high intermolecular force even in the amorphous portions. Thus, a film made from EVOH is less likely to transmit gas molecules and exhibits excellent gas barrier properties.

A resin composition containing EVOH is excellent in transparency, oxygen and other gas barrier properties, aroma retention, solvent resistance, oil resistance, mechanical strength, and the like. The resin composition is therefore formed into films, sheets, bottles, and the like and widely used as various packaging materials, such as food, pharmaceutical products, industrial chemicals, and agricultural chemicals packaging materials. For example, PTL 1 discloses a multilayer structure having an EVOH layer.

### RELATED ART DOCUMENT

### PATENT DOCUMENT

PTL 1: JP-A-2010-234805

### SUMMARY

### PROBLEMS TO BE SOLVED BY THE DISCLOSURE

EVOH has been widely used as a large variety of packaging materials but there is room for improvement in thermal stability.

### MEANS FOR SOLVING THE PROBLEMS

In view of such a situation, the inventor of the present disclosure has conducted elaborate studies and found that a resin composition having excellent thermal stability can be obtained by combining EVOH and lycopene.

Specifically, the present disclosure provides the following [1] to [6].
[1] A resin composition containing an EVOH (A) and lycopene (B).
[2] The resin composition according to [1], in which the lycopene (B) content is 0.001 to 100 ppm with respect to the resin composition.
[3] The resin composition according to [1] or [2], further containing a polyolefin resin (C).
[4] A multilayer structure having a layer including the resin composition according to any one of [1] to [3].
[5] A molded article made of the resin composition according to any one of [1] to [3].
[6] A method for producing the resin composition according to any one of [1] to [3], the method including mixing an EVOH (A) and lycopene (B).

### EFFECTS OF THE DISCLOSURE

The resin composition according to the present disclosure has excellent thermal stability. The multilayer structure having a layer including the resin composition according to the present disclosure and the molded article formed of the resin composition according to the present disclosure also have excellent thermal stability.

### EMBODIMENTS OF THE DISCLOSURE

Hereinafter, the present disclosure will be described in detail. However, the description merely provides examples of preferred embodiments.

In the present disclosure, the expression "X to Y" (X and Y are given numbers) is intended to encompass "preferably greater than X" or "preferably less than Y" unless otherwise specified, in addition to the meaning of "equal to or more than X and equal to or less than Y".

Further, the expression "equal to or more than X" (X is a given number) or "equal to or less than Y" (Y is a given number) is intended to encompass the meaning "preferably more than X" or "preferably less than Y".

Further, the expression "x and/or y" (x and y are each a given configuration or component) is intended to mean the following three meanings: only x; only y; and x and y.

A resin composition according to an embodiment of the present disclosure (hereinafter referred to as "the present resin composition") includes an EVOH (A) and lycopene (B).

Each component will be described below.

### [EVOH (A)]

The EVOH (A) used in the present resin composition is a non-water-soluble thermoplastic resin usually obtained by saponifying an ethylene-vinyl ester copolymer which is a copolymer of ethylene and a vinyl ester monomer. Vinyl acetate is typically used as the vinyl ester monomer from an economic standpoint.

The copolymerization of the ethylene and the vinyl ester monomer can be performed by any known polymerization method such as solution polymerization, suspension polymerization, or emulsion polymerization. Typically, solution polymerization using methanol as a solvent is used. The saponification of the resulting ethylene-vinyl ester copolymer may also be performed by any known method.

The thus produced EVOH (A) mainly contains an ethylene structural unit and a vinyl alcohol structural unit, and further contains a small amount of a vinyl ester structural unit left as an unsaponified portion when the degree of saponification is less than 100 mol%.

Vinyl acetate is typically used as the vinyl ester monomer as described above from an economic standpoint and in view of efficiency of impurity treatment during production. Other examples of the vinyl ester monomer other than vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. These can be used alone or in combination of two or more. Among these, an aliphatic vinyl ester having 3 to 20 carbon atoms, preferably 4 to 10 carbon atoms, and particularly preferably 4 to 7 carbon atoms can be used.

The ethylene structural unit content in the EVOH (A) measured in conformity with ISO14663 is typically 20 to 60 mol%, preferably 25 to 50 mol%, particularly preferably 27 to 35 mol%. If this content is too low, the gas barrier properties in high humidity and the melt moldability tend to be reduced. Conversely, if too high, the gas barrier properties tend to be reduced. The ethylene structural unit content can be controlled by the pressure of ethylene when the vinyl ester monomer and the ethylene are copolymerized.

The degree of saponification of the EVOH (A) measured in conformity with JIS K6726 (where a solution obtained by homogeneously dissolving the EVOH (A) in a water/methanol solvent is used) is typically 90 to 100 mol%, preferably 95 to 100 mol%, particularly preferably 99 to 100 mol%. If the degree of saponification is too low, the gas barrier properties tend to be reduced. The degree of saponification can be controlled by the amount of a saponification catalyst (usually, an alkaline catalyst such as sodium hydroxide is used), temperature, time, and the like when the ethylene-vinyl ester copolymer is saponified.

The EVOH (A) has a melt flow rate (MFR) (at 210°C with a load of 2160 g) of typically 0.1 to 100 g/10 minutes, preferably 1 to 50 g/10 minutes, particularly preferably 3 to 35 g/10 minutes. If the MFR is too high, the film formability tends to be unstable. If too low, the viscosity becomes too high and the melt extrusion tends to be difficult.

The MFR serves as an indicator of the degree of polymerization of the EVOH (A) and can be adjusted by the amount of polymerization initiator and/or the amount of solvent when the ethylene and the vinyl ester monomer are copolymerized.

The EVOH (A) may further contain a structural unit derived from any of the following comonomers in a range that does not impair the effects of the present disclosure (for example, equal to or less than 10 mol% of the EVOH (A)).

Examples of the comonomers include olefins such as propylene, 1-butene, and isobutene; hydroxyl-containing α-olefins such as 3-buten-1-ol, 3-butene-1,2-diol, 4-penten-1-ol, and 5-hexene-1,2-diol, and derivatives including esterification products and acylation products of these hydroxyl-containing α-olefins; hydroxyalkylvinylidenes such as 2-methylenepropane-1,3-diol and 3-methylenepentane-1,5-diol; hydroxyalkylvinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts of these acids, and mono- or dialkyl esters of these acids, the one or two alkyl groups each having 1 to 18 carbon atoms; acrylamide and analogues thereof such as N-alkylacrylamides in which the alkyl has 1 to 18 carbon atoms, N,N-dimethylacrylamide, 2-acrylamidopropanesulfonic acid and salts thereof, and acrylamidopropyldimethylamine and acid salts or quaternary salts thereof; methacrylamide and analogues thereof such as N-alkylmethacrylamides in which the alkyl has 1 to 18 carbon atoms, N,N-dimethylmethacrylamide, 2-methacrylamidopropanesulfonic acid and salts thereof, and methacrylamidopropyldimethylamine and acid salts or quaternary salts thereof; N-vinylamides such as N-vinylpyrrolidone, N-vinylformamide, and N-vinylacetamide; vinyl cyanide compounds such as acrylonitrile and methacrylonitrile; vinyl ethers such as alkyl vinyl ethers in which the alkyl has 1 to 18 carbon atoms, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silane compounds such as trimethoxyvinylsilane; halogenated allylated compounds such as allyl acetate and allyl chloride; allyl alcohol compounds such as allyl alcohol and dimethoxyallyl alcohol; trimethyl(3-acrylamido-3-dimethylpropyl)ammonium chloride, and acrylamido-2-methylpropanesulfonic acid. These can be used alone or in combination of two or more.

In particular, an EVOH copolymerized with hydroxyl-containing α-olefins, that is, an EVOH having a hydroxyl group in a side chain is preferred in that good secondary formability is achieved while gas barrier properties are maintained. An EVOH having a primary hydroxyl group in a side chain is more preferred, and an EVOH having a 1,2-diol structure in a side chain is particularly preferred.

A preferable example of the EVOH having a primary hydroxyl group in a side chain is an EVOH in which the content of the structural unit derived from a monomer having the primary hydroxyl group is typically 0.1 to 20 mol% of the EVOH, preferably 0.5 to 15 mol%, particularly preferably 1 to 10 mol%.

Further, "post-modified" EVOH, such as urethanized, acetalized, cyanoethylated, or oxyalkylenated EVOH, may be used as the EVOH (A).

Furthermore, the EVOH (A) used in the present resin composition may be a mixture of two or more kinds of EVOHs, for example, EVOHs with different degrees of saponification, different degrees of polymerization, and different copolymerization components.

The EVOH (A) content in the present resin composition is typically equal to or more than 0.01% by mass, preferably equal to or more than 0.1% by mass, more preferably equal to or more than 1% by mass, even more preferably equal to or more than 10% by mass, particularly preferably equal to or more than 50% by mass, most preferably equal to or more than 80% by mass. The upper limit of the EVOH (A) content is the total mass excluding the lycopene (B) from the resin composition. When the value of the content is within the above range, the effects of the present disclosure tend to be achieved more effectively.

### [Lycopene (B)]

The lycopene (B) used in the present resin composition is a kind of carotene. The inclusion of the lycopene (B) in the present resin composition improves thermal stability.

The lycopene (B) content is not limited but preferably 0.001 to 100 ppm with respect to the resin composition, more preferably 0.005 to 90 ppm, even more preferably 0.01 to 50 ppm, particularly preferably 0.05 to 10 ppm, most preferably 0.1 to 1 ppm. When the lycopene (B) has the above content, the resistance against coloring after heating can be further increased.

### [Polyolefin Resin (C)]

It is preferable that the present resin composition includes a polyolefin resin (C) as an optional component.

Examples of the polyolefin resin (C) include polypropylenes; propylene resins such as propylene copolymers obtained by copolymerizing propylene with α-olefins such as ethylene, 1-butene, 1-hexene, and 4-methyl-1-pentene; polyethylenes such as low-density polyethylenes, linear low-density polyethylenes, medium-density polyethylenes, and high-density polyethylenes; ethylene resins such as ethylene copolymers obtained by copolymerizing ethylene with α-olefins such as 1-butene, 1-hexene, and 4-methyl-1-pentene; poly(1-butene), and poly(4-methyl-1-pentene).

The polyolefin resins (C) may be used alone or may be used in combination of two or more with different copolymerization component compositions and physical properties.

Among these, propylene resins such as polypropylenes and propylene copolymers, and ethylene resins such as polyethylenes and ethylene copolymers are preferred as the polyolefin resin (C). In terms of obtaining a molded article with excellent heat resistance, propylene resins are preferred, and polypropylenes are more preferred as the polyolefin resin (C). On the other hand, in terms of obtaining a molded article with excellent transparency, ethylene resins are preferred, polyethylenes are more preferred, and linear low-density polyethylenes are even more preferred as the polyolefin resin (C).

The melt flow rate (MFR: at 190°C or 210°C with a load of 2160 g) of the polyolefin resin (C) is not limited but typically 0.01 to 150 g/10 minutes, preferably 0.1 to 50 g/10 minutes, more preferably 0.5 to 25 g/10 minutes, and even more preferably 0.8 to 10 g/10 minutes.

The polyolefin resin (C) content in the present resin composition is not limited but typically equal to or more than 0.1% by mass, preferably equal to or more than 5% by mass, more preferably equal to or more than 10% by mass, even more preferably equal to or more than 50% by mass, particularly preferably equal to or more than 80% by mass, most preferably equal to or more than 90% by mass. The upper limit of the polyolefin resin (C) content is typically 99.99% by mass.

The total content of the EVOH (A) and the polyolefin resin (C) in the present resin composition is not limited but preferably equal to or more than 70% by mass, more preferably equal to or more than 80% by mass, even more preferably equal to or more than 90% by mass. The upper limit of the total content of the EVOH (A) and the polyolefin resin (C) is the total mass excluding the lycopene (B) from the resin composition.

In the present resin composition, the mass content ratio of the EVOH (A) to the polyolefin resin (C) [EVOH (A)/polyolefin resin (C)] is typically 0.1/99.9 to 99.9/0.1, preferably 1/99 to 99/1, more preferably 2/98 to 98/2, even more preferably 3/97 to 90/10, particularly preferably 4/96 to 80/20, most preferably 5/95 to 50/50. When the mass content ratio of the EVOH (A) to the polyolefin resin (C) is within the above range, the effects of the present disclosure tend to be achieved more effectively.

### [Other Components]

The present resin composition can contain resins other than the EVOH (A) and the polyolefin resin (C), and any additives other than the lycopene (B) (hereinafter these are referred to as "other components") in a range that does not significantly impair the effects of the present disclosure and according to the intended use. One of the other components may be used, or any combination of two or more in any proportion may be used.

Examples of the other components include plasticizers, reinforcing agents, fillers, pigments, dyes, lubricants, antioxidants, antistatic agents, UV absorbers, heat stabilizers, photostabilizers, surfactants, antimicrobial agents, antistatic agents, drying agents, anti-blocking agents, flame retardants, crosslinkers, curing agents, foaming agents, and nucleating agents. The content of the other components in the present resin composition is typically equal to or less than 50% by mass in total, preferably equal to or less than 20% by mass, more preferably equal to or less than 10% by mass.

### [Method for Producing Resin Composition]

The present resin composition is produced by using the EVOH (A) and the lycopene (B), which are essential components as described above, and the polyolefin resin (C) and the other components, if necessary.

The method may include, for example, a step of mixing the EVOH (A) and the lycopene (B), but the method of mixing the EVOH (A) and the lycopene (B) is not limited as long as the present resin composition includes the EVOH (A) and the lycopene (B).

Examples of the method for producing the present resin composition include any known methods such as dry blending method, melt mixing method, solution mixing method, and impregnation method. These methods can be combined as desired.

The mixing method is not limited. A mixture of components obtained by dry blending may be directly used as the resin composition. However, a method in which the components are mixed by the melt mixing method, the solution mixing method, or the like, then formed into a shape easy to handle, such as pellets, and prepared as a resin composition is usually used, and the melt mixing method is preferred in terms of productivity.

An example of the melt mixing method is typically a method in which the components are dry-blended and then melted and mixed. Any known blending devices such as kneader-ruders, extruders, mixing rolls, Banbury mixers, and Plastomill can be used as a mixing device. Typically, it is industrially preferable to use a single screw or twin screw extruder. It is also preferable that the extruder is provided with a vent suction device, a gear pump device, a screen device, or the like, if necessary.

The melt kneading temperature is typically the setting temperature of an extruder and a die and in the range of 160 to 300°C, preferably 170 to 260°C, particularly preferably 180 to 240°C. If the melt kneading temperature is too low, the resin becomes an unmelted state and the processing state tends to be unstable. If too high, the resin composition is thermally degraded and the quality of the resulting molded article tends to be reduced.

The amounts of the lycopene (B) and optional components in the present resin composition can be adjusted by any method. For example, a method of adjusting by adding a desired amount or a method in which a masterbatch is prepared and diluted may be employed. When a masterbatch is diluted, any dilution method can be employed but dry blending is preferred in terms of productivity.

The thus obtained present resin composition can be suitably used for a multilayer structure and a molded article.

### [Multilayer Structure]

A multilayer structure according to an embodiment of the present disclosure (hereinafter referred to as "the present multilayer structure") includes at least one layer containing the present resin composition (hereinafter referred to as "resin composition layer").

As long as the present multilayer structure has the resin composition layer, the other layer configuration is not limited. For example, the present multilayer structure may have a base material layer containing any other base material including paper, nonwoven fabric, metal foil, or a thermoplastic resin other than the present resin composition as a main component (hereinafter referred to as "base material resin").

Examples of the base material resin include (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-α-olefin (α-olefin having 4 to 20 carbon atoms) copolymers, polypropylene resins such as polypropylenes and propylene-α-olefin (α-olefin having 4 to 20 carbon atoms) copolymers, polybutenes, polypentenes, and polycycloolefin resins (polymers having a cycloolefin structure in a main chain and/or a side chain thereof), polyolefin resins in a broader sense including modified olefin resins such as unsaturated carboxyl-modified polyolefin resins obtained by graft-modifying any of the aforementioned polyolefin resins with an unsaturated carboxylic acid or an unsaturated carboxylic acid ester, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones. These can be used alone or in combination of two or more.

Among these, the polyamide resins, the polyolefin resins, the polyester resins, and the polystyrene resins, which are hydrophobic resins, are preferred. The polyolefin resins such as the polyethylene resins, the polypropylene resins, the polycycloolefin resins, and the unsaturated carboxyl-modified polyolefin resins obtained by modifying these polyolefin resins are more preferred. In particular, the polycycloolefin resins are preferably used as hydrophobic resins.

When the resin composition layer is "a" (a1, a2, ...) and the base material resin layer is "b" (b1, b2, ...), the layered configuration of the present multilayer structure may be any combination, such as a/b, b/a/b, a/b/a, a1/a2/b, a/b1/b2, b2/b1/a/b1/b2, or b2/b1/a/b1/a/b1/b2. When the present multilayer structure includes a recycle layer R containing a mixture of the present resin composition and the base material resin, which is obtained by remelt-molding discards or defectives occurring in the process of producing the present multilayer structure or the produced present multilayer structure, the layered configuration may be b/R/a, b/R/a/b, b/R/a/R/b, b/a/R/a/b, b/R/a/R/a/R/b, or the like. The total number of layers in the present multilayer structure is typically 2 to 15, preferably 3 to 10. In the above layered configurations, an adhesive resin layer containing an adhesive resin may be interposed between individual layers, if necessary.

A known adhesive resin can be used as the adhesive resin. The adhesive resin can be selected as appropriate depending on the kind of thermoplastic resin used in the base material resin layer "b". Typical examples of the adhesive resin include carboxyl-containing modified polyolefin polymers obtained by chemically bonding an unsaturated carboxylic acid or anhydride thereof to a polyolefin resin by addition reaction, graft reaction, or the like. Examples include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. One or a mixture of two or more selected from these polymers can be used.

In the present multilayer structure, when the adhesive resin layer is used between the resin composition layer and the base material layer, it is preferable to use an adhesive resin having excellent hydrophobicity, because the adhesive resin layer is located in contact with the resin composition layer.

The base material resin and the adhesive resin may contain plasticizer, filler, clay (such as montmorillonite), colorant, antioxidant, antistatic agent, lubricant, nucleating agent, antiblocking agent, wax, and the like as conventionally known, in a range that does not impair the spirit of the present disclosure (for example, typically equal to or less than 30% by mass, preferably equal to or less than 10% by mass with respect to the base material resin and the adhesive resin). These can be used alone or in combination of two or more.

The lamination of the present resin composition layer and the base material resin layer (including the case where the adhesive resin layer is interposed) can be performed by a known method. Examples of the laminating method include: a method in which a film or a sheet of the present resin composition is laminated with the base material resin by melt extrusion; a method in which the base material resin layer is laminated with the present resin composition by melt extrusion; a method in which the present resin composition and the base material resin are co-extruded; a method in which the resin composition layer and the base material resin layer are dry-laminated using a known adhesive agent such as organic titanium compound, isocyanate compound, polyester compound, or polyurethane compound; and a method in which a solution of the present resin composition is applied on the base material resin, and then the solvent is removed. Among these methods, in consideration of cost and environment, the method of coextrusion is preferred.

The present multilayer structure undergoes a (heat) stretching process, if necessary. The stretching process may be either uniaxial stretching or biaxial stretching. The biaxial stretching may be either simultaneous stretching or sequential stretching. As a stretching method, a method with a high stretch ratio can be employed among roll stretching, tenter stretching, tubular stretching, stretch blowing, and vacuum pressure forming methods. The stretching temperature is selected from the range of about typically 40 to 170°C, preferably 60 to 160°C, which is a temperature near the melting point of the present multilayer structure. If the stretching temperature is too low, the stretchability tends to be poor. If too high, to maintain a stable stretch state tends to be difficult.

The thickness of the present multilayer structure (including the stretched multilayer structure) and the thicknesses of the resin composition layer, the base material resin layer, and the adhesive resin layer that constitute the present multilayer structure may vary with the layered configuration, the kind of base material resin, the kind of adhesive resin, intended use, packaging form, required physical properties, and the like, but the thickness of the present multilayer structure (including the stretched multilayer structure) is typically 10 to 5000 µm, preferably 30 to 3000 µm, particularly preferably 50 to 2000 µm. The thickness of the resin composition layer is typically 1 to 500 µm, preferably 3 to 300 µm, particularly preferably 5 to 200 µm. The thickness of the base material resin layer is typically 5 to 3000 µm, preferably 10 to 2000 µm, particularly preferably 20 to 1000 µm. The thickness of the adhesive resin layer is typically 0.5 to 250 µm, preferably 1 to 150 µm, particularly preferably 3 to 100 µm.

Further, the thickness ratio of the resin composition layer to the base material resin layer in the present multilayer structure (resin composition layer/base material resin layer) is typically 1/99 to 50/50, preferably 5/95 to 45/55, particularly preferably 10/90 to 40/60, where if these layers each include a plurality of layers, the thickness ratio is the ratio between the thickest one of the resin composition layers and the thickest one of the base material resin layers. Further, the thickness ratio of the resin composition layer to the adhesive resin layer in the present multilayer structure (resin composition layer/adhesive resin layer) is typically 10/90 to 99/1, preferably 20/80 to 95/5, particularly preferably 50/50 to 90/10, where if these layers each include a plurality of layers, the thickness ratio is the ratio between the thickest one of the resin composition layers and the thickest one of the adhesive resin layers.

It is noted that heat setting for the purpose of imparting dimension stability may be performed after stretching. The heat setting can be performed by known means. For example, the stretched film is subjected to thermal treatment with a tension state being kept, typically at 80 to 180°C, preferably 100 to 165°C, typically for about 2 to 600 seconds. When the multilayer stretched film obtained from the present resin composition is used as a shrinkable film, for example, a cold-setting process for imparting a heat-shrinkable property may be performed by applying cold air to the stretched film, without performing the heat setting.

A cup or tray-shaped multilayer container may be produced from the present multilayer structure. In this case, a drawing process is typically employed. Specific examples include vacuum forming method, pressure forming method, vacuum pressure forming method, and plug-assisted vacuum pressure forming method. When a tube or bottle-shaped multilayer container (laminate structure) is produced from a multilayer parison (a hollow tubular preform before blowing), a blow molding process is employed. Specific examples include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, injection inline type biaxial stretching blow molding method, etc.). The resulting laminate may be subjected to heating process, cooling process, rolling process, printing process, dry laminating process, solution or melt coating process, bag forming process, deep drawing process, box forming process, tube forming process, splitting process, or the like, if necessary.

### [Molded Article]

A molded article according to one embodiment of the present disclosure (hereinafter referred to as "the present molded article") is made by molding the present resin composition.

Examples of the shape of the present molded article include films, sheets, tapes, cups, trays, tubes, bottles, pipes, filaments, extruded products with modified cross sections, and various molded articles with irregular shapes.

The molding method for the present molded article is not limited, and any molding method that can be applied to common resin compositions can be applied. A melt molding method is usually used.

Examples of the melt molding method include extrusion molding (T-die extrusion, inflation extrusion, blow molding, melt spinning, profile extrusion, etc.), and injection molding.

The melt molding temperature can be selected as appropriate typically from the range of 150 to 300°C.

In the molding, a heat stretching process may be performed in order to improve the physical properties of the molded article or to form any container shape of interest. As used herein the heat stretching process means the operation of forming a molded article in the shape of film, sheet, parison, or the like that is evenly thermally heated, into the shape of cup, tray, tube, bottle, or film by using chucks, plugs, vacuum force, pressure force, blowing, and the like. Examples of the stretching method include roll stretching, tenter stretching, tubular stretching, stretch blowing, vacuum forming, pressure forming, and vacuum pressure forming. The stretching may be either uniaxial stretching or biaxial stretching. In the case of the biaxial stretching, either a simultaneous biaxial stretching process or a sequential biaxial stretching can be employed. The stretching temperature is typically 60 to 170°C and preferably 80 to 160°C.

The present resin composition, the present molded article, and the present multilayer structure are suitable, in particular, for various packaging material containers for general foods, condiments such as mayonnaise and dressing, fermented foods such as miso, fat and oil foods such as salad oil, beverages, cosmetics, and pharmaceutical products.

### EXAMPLES

The present disclosure will be described more specifically below using examples. However, it should be understood that the present disclosure is not limited to the following examples within the scope of the present disclosure.

In the examples, "parts" means parts on a mass basis.

Prior to the examples, the following components were prepared.
- EVOH (A1): ethylene structural unit content of 32 mol%, MFR of 3 g/10 minutes (at 210°C with a load of 2160 g), degree of saponification of 99.7 mol%
- EVOH (A2): ethylene structural unit content of 44 mol%, MFR of 3 g/10 minutes (at 210°C with a load of 2160 g), degree of saponification of 99.6 mol%
- Lycopene (B): from Tokyo Chemical Industry Co., Ltd.
- β-carotene (B'): from Tokyo Chemical Industry Co., Ltd.
- Polyethylene (C): "NOVATEC (registered trademark) UF421 (linear low-density polyethylene)" from Japan Polyethylene Corporation, MFR of 0.9 g/10 minutes (at 190°C with a load of 2160 g)

### <Example 1>

### (Production of Masterbatch 1)

To 3 mL of a solution mixture of tetrahydrofuran:ethanol = "3:2 (volumetric ratio)", 150 mg of the lycopene (B) was added to produce a slurry using an ultrasonic vibration device. The resulting slurry was dry-blended with 1.5 kg of the EVOH (A1) and dried using a vacuum drier under a vacuum at 40°C for two hours to obtain a mixture 1. The mixture 1 was fed to a twin-screw extruder with a two-hole die (from Imoto machinery Co., LTD, 20 mm in diameter, L/D=25), and the ejected strand was cooled by air and solidified. The air was then blown to the solidified strand to remove water droplets on the surface of the strand, and then the strand was cut into pellets of a masterbatch 1. The extrusion conditions were set as follows.
- Extruder setting temperature: C1/C2/C3/C4=170/210/210/210°C

The masterbatch 1 and the EVOH (A1) were dry-blended at a ratio of 99.9:0.1% by mass, and the mixture was fed to a twin-screw extruder with a two-hole die (from Imoto machinery Co., LTD, 20 mm in diameter, L/D=25) and the ejected strand was cooled by air and solidified. The air was then blown to the solidified strand to remove water droplets on the surface of the strand, and then the strand was cut to produce (pellets of) a resin composition of Example 1. The extrusion conditions were set as follows.
- Extruder setting temperature: C1/C2/C3/C4=170/210/210/210°C

### <Examples 2 to 5>

Resin compositions were produced in the same way as in Example 1 except that the kinds of EVOH and the lycopene content were changed as listed in Table 1 below.

### <Example 6>

### (Production of Masterbatch 2)

A dry blend was produced by dry-blending 0.9 kg of the polyethylene (C) and 0.1 kg of the EVOH (A1). To 3 mL of a solution mixture of tetrahydrofuran:ethanol = "3:2 (volumetric ratio)", 100 mg of the lycopene (B) was added to produce a slurry using an ultrasonic vibration device. The resulting slurry was dry-blended with the dry blend and dried using a vacuum drier under a vacuum at 40°C for two hours to obtain a mixture 2. The mixture 2 was fed to a twin-screw extruder with a two-hole die (from Imoto machinery Co., LTD, 20 mm in diameter, L/D=25) and the ejected strand was cooled by air and solidified. The air was then blown to the solidified strand to remove water droplets on the surface of the strand, and then the strand was cut into pellets of a masterbatch 2. The extrusion conditions were set as follows.
- Extruder setting temperature: C1/C2/C3/C4=170/210/210/210°C

The masterbatch 2 and the dry blend were fed at a ratio of 99.9:0.1% by mass to a twin-screw extruder with a two-hole die (from Imoto machinery Co., LTD, 20 mm in diameter, L/D=25) and the ejected strand was cooled by air and solidified. The air was then blown to the solidified strand to remove water droplets on the surface of the strand, and then the strand was cut to produce (pellets of) a resin composition of Example 6. The extrusion conditions were set as follows.
- Extruder setting temperature: C1/C2/C3/C4=170/210/210/210°C

### <Example 7>

A resin composition was produced in the same way as in Example 6 except that the amount of lycopene in Example 6 was changed as listed in Table 2 below.

### <Comparative Example 1>

To 3 mL of a solution mixture of tetrahydrofuran:ethanol = "2:1 (volumetric ratio)", 100 mg of β-carotene (B') was added to produce a slurry using an ultrasonic vibration device. The resulting slurry was dry-blended with 1.0 kg of the EVOH (A1) and dried using a vacuum drier under a vacuum at 40°C for two hours to obtain a mixture 3. The mixture 3 was fed to a twin-screw extruder with a two-hole die (from Imoto machinery Co., LTD, 20 mm in diameter, L/D=25) and the ejected strand was cooled by air and solidified. The air was then blown to the solidified strand to remove water droplets on the surface of the strand, and then the strand was cut to produce (pellets of) a resin composition of Comparative Example 1 containing 100 ppm of β-carotene. The extrusion conditions were set as follows.
- Extruder setting temperature: C1/C2/C3/C4=170/210/210/210°C

The produced resin compositions were evaluated for thermal stability and YI after heating as described below. The evaluation results of thermal stability are shown in Tables 1 and 2 below, and the evaluation results of YI after heating are shown in Table 3 below.

### <Evaluation of Thermal Stability>

### (Examples 1 to 5, Comparative Example 1)

The EVOH (A1) or the EVOH (A2) was fed with no lycopene (0 ppm of lycopene) to a twin-screw extruder with a two-hole die (from Imoto machinery Co., LTD, 20 mm in diameter, L/D=25) and the ejected strand was cooled by air and solidified. The air was then blown to the solidified strand to remove water droplets on the surface of the strand, and then the strand was cut to produce (pellets of) a resin composition of the EVOH (A1) or the EVOH (A2) with no lycopene. The extrusion conditions were set as follows.
- Extruder setting temperature: C1/C2/C3/C4=170/210/210/210°C

For 5 mg of each of the resin composition of the EVOH (A1) or the EVOH (A2) with no lycopene and the resin compositions of Examples 1 to 5 and Comparative Example 1, the temperature at a point in time when the mass was reduced to 95% of the mass before measurement (5% mass loss temperature) was measured using a thermogravimeter (Pyris 1 TGA available from Perkin Elmer, Inc.) under a nitrogen atmosphere at a gas flow rate of 20 mL/min and in a temperature range of 30 to 550°C. Table 1 below shows the difference of the 5% mass loss temperature of the resin compositions of Examples 1 to 5 and Comparative Example 1 from the 5% mass loss temperature of the EVOH (A1) or the EVOH (A2) with no lycopene. The higher (+) 5% mass loss temperature compared with the resin composition with no lycopene indicates the higher thermal stability.

### <Evaluation of Thermal Stability>

### (Examples 6 and 7)

Ten percent by mass of the EVOH (A1) and 90% by mass of the polyethylene (C) were fed with no lycopene (0 ppm of lycopene) to a twin-screw extruder with a two-hole die (from Imoto machinery Co., LTD, 20 mm in diameter, L/D=25) and the ejected strand was cooled by air and solidified. The air was then blown to the solidified strand to remove water droplets on the surface of the strand, and then the strand was cut to produce (pellets of) a resin composition including 10% by mass of the EVOH (A1) and 90% by mass of the polyethylene (C) with no lycopene. The extrusion conditions were set as follows.
- Extruder setting temperature: C1/C2/C3/C4=170/210/210/210°C

For 5 mg of each of the resin composition with no lycopene and the resin compositions of Examples 6 and 7, the temperature at a point in time when the mass was reduced to 90% of the mass before measurement (10% mass loss temperature) was measured using a thermogravimeter (Pyris 1 TGA available from Perkin Elmer, Inc.) under a nitrogen atmosphere at a gas flow rate of 20 mL/min and in a temperature range of 30 to 550°C. Table 2 below shows the difference of the 10% mass loss temperature of the resin compositions of Examples 6 and 7 from the 10% mass loss temperature of the resin composition with no lycopene. The higher 10% mass loss temperature (+) compared with the resin composition with no lycopene indicates the higher thermal stability.

### <Evaluation of YI After Heating>

### (Examples 1 and 2)

The resin composition of the EVOH (A1) with no lycopene and the resin compositions of Examples 1 and 2 were each heated in an oven at 150°C for five hours and fully filled into a cylinder with an inner diameter of 32 mm and a height of 30 mm. In this state, the YI value after heating was measured by using a spectrocolorimeter SE6000 (from NIPPON DENSHOKU INDUSTRIES CO., LTD.). Table 3 shows the difference of the YI value after heating of the resin compositions of Examples 1 and 2 from the YI value after heating of the resin composition of the EVOH (A1) with no lycopene. The lower YI value after heating (-) compared with the resin composition with no lycopene indicates that coloring is suppressed.

**Table 1**

| | EVOH (A) | Lycopene (B) content [ppm] | Thermal stability (5% mass loss temperature) (comparison with resin composition with 0 ppm of lycopene (B)) [°C] |
|---|---|---|---|
| Example 1 | A1 | 0.1 | +1.2 |
| Example 2 | A1 | 1 | +4.7 |
| Example 3 | A1 | 10 | +7.4 |
| Example 4 | A1 | 100 | +11.0 |
| Example 5 | A2 | 10 | +0.9 |
| Comparative Example 1 | A1 | 0 (B' 100 ppm) | -2.9 |

**Table 2**

| | EVOH (A) | | Polyokefin resin (C) | Lycopene (B) content [ppm] | Thermal stability (1 0% mass loss temperature) (comparison with resin composition with 0 ppm of lycopene (B)) [°C] |
|---|---|---|---|---|---|
| | Kind | Content [% by mass] | Content [% by mass] | | |
| Example 6 | A1 | 10 | 90 | 1 | +23.3 |
| Example 7 | A1 | 10 | 90 | 100 | +37.6 |

**Table 3**

| | EVOH (A) | Lycopene (B) content [ppm] | YI after heating (comparison wih resin compostion with 0 ppm of lycopene (B)) [°C] |
|---|---|---|---|
| Example 1 | A1 | 0.1 | -2.79 |
| Example 2 | A1 | 1 | -1.67 |

Table 1 above shows that the 5% mass loss temperatures of Examples 1 to 5 are higher relative to the resin composition with no lycopene, suggesting that the thermal stability is improved. On the other hand, in Comparative Example 1 using β-carotene instead of lycopene, the 5% mass loss temperature is lower relative to the resin composition with no lycopene, suggesting that thermal stability is reduced.

Table 3 above shows that the YI after heating of Examples 1 and 2 is lower relative to the resin composition with no lycopene, suggesting that coloring is suppressed.

Table 2 above shows that the 10% mass loss temperatures of Examples 6 and 7 are higher relative to the resin composition with no lycopene, suggesting that thermal stability is improved.

The molded article and the multilayer structure produced from the above resin composition have improved thermal stability because the resin composition has thermal stability.

While specific forms of the embodiments of the present disclosure have been shown in the above examples, the examples are merely illustrative and are not intended to be limiting. It is contemplated that various modifications apparent to those skilled in the art could be made within the scope of the present disclosure.

### INDUSTRIAL APPLICABILITY

The resin composition of the present disclosure has excellent thermal stability and therefore is useful, in particular, as various packaging materials for various foods, condiments such as mayonnaise and dressing, fermented foods such as miso, fat and oil foods such as salad oil, beverages, cosmetics, and pharmaceutical products.

## Claims

1. A resin composition comprising an ethylene-vinyl alcohol copolymer (A) and lycopene (B).

2. The resin composition according to claim 1, wherein the lycopene (B) content is 0.001 to 100 ppm with respect to the resin composition.

3. The resin composition according to claim 1, further comprising a polyolefin resin (C).

4. A multilayer structure comprising a layer comprising the resin composition according to any one of claims 1 to 3.

5. A molded article comprising the resin composition according to any one of claims 1 to 3.

6. A method for producing the resin composition according to any one of claims 1 to 3, the method comprising mixing an ethylene-vinyl alcohol copolymer (A) and lycopene (B).
